# EUROPEAN PATENT APPLICATION

(11) **EP 4 831 140 A1**
(43) Date of publication of application: **28.10.2026**
(21) Application number: 25172391.2
(22) Date of filing: 24.04.2025
(51) Int. Cl.: C04B 7/32, C04B 28/06, C04B 28/16

(54) **BINDER COMPOSITION FOR INORGANIC FOAMS**

(71) Applicant: Sika Technology AG, 6340 Baar (CH)
(72) Inventor: KOCH, Lukas, 83308 Trostberg (DE); MOHRI, Nils Erich Karl, 70439 Stuttgart (DE)
(74) Representative: Sika Patent Attorneys

(57) **Abstract**

An ettringite forming binder composition, especially for the formation of a hardened mineral foam, comprises a mixture of:
a) 65 - 100 wt.%, especially 70 - 85 wt.%, of a mixture of calcium sulfoaluminate, especially ye'elemite, and calcium sulfate;
b) 0 - 35 wt.%, especially 15 - 30 wt.%, of at least one source of calcium oxide;

wherein the wt.% are in each case relative to the total dry weight of components a) and b) together; and
whereby the at least one source of calcium oxide is different from the calcium sulfoaluminate and the calcium sulfate.

## Description

### Technical Field

The invention is concerned with an ettringite forming binder composition, especially for the formation of a hardened mineral foam. Furthermore, the invention is concerned with a building material, especially a particulate building material, for the formation of a mineral foam, comprising an ettringite forming binder and inorganic particles. Other aspects of the invention are related to a foamable composition comprising an ettringite forming binder, a hardened mineral foam as well as a process for the formation of a mineral foam and the use of calcium sulfate and/or a source of calcium oxide, especially calcium oxide, to set the thermal conductivity and/or the compressive strength of a hardened mineral foam.

### Background

In construction industry, foamed mineral binder compositions, such as e.g. foamed cement or foamed concrete, have been known for a long time. Foamed mineral binder compositions typically provide a combination of reduced weight and thermal insulation with excellent fire resistance.

For example, foamed concrete, also known as cellular light weight concrete (CLC), is most easily produced by either mixing a blowing agent, e.g. H₂O₂ or aluminum powder, into the concrete slurry, or by producing an aqueous foam with suitable surfactants, which are mixed into the slurry.

In this regard, WO 2018/162381 (Construction Research & Technology) discloses for example mineral foams based on calcium sulfoaluminate cement. Specifically, the foam comprises (i) at least one group of inorganic particles; (ii) at least one amphiphilic compound; (iii) at least one inorganic binder mixture comprising (iiia) at least one calcium sulfoaluminate mixture, and optionally (iiib) at least one further inorganic binder selected from the group consisting of hydraulic binders, latent hydraulic binders, pozzolanic binders, and mixtures thereof; (iv) water; and optionally (v) at least one additive.

Although with known concrete foams quite low densities can be obtained, the compressive or bending strengths usually suffer considerably due to the brittleness of the foamed materials. Consequently, concrete foams are either used at moderate densities, i.e. representing a compromise between thermal conductivity and strength, or they must be used in combination with reinforcing elements, e.g. reinforcing frames. In the latter case, however, the thermal insulation properties are affected by the frame material acting as a thermal bridge.

Another issue frequently encountered with foamed mineral binder compositions is that foams are thermodynamically unstable systems, which in turn results in partial collapsing of the foam during the hardening process.

Therefore, there is still a need to provide improved solutions that overcome the above-mentioned drawbacks of foamed mineral binder compositions or exhibit them to a lesser extent.

### Disclosure of the invention

It is an object of the present invention to provide improved and flexible solutions for producing foamed mineral binder compositions or hardened mineral foams, respectively. Thereby, preferably, the solutions should allow for producing hardened mineral foams that simultaneously have good mechanical properties, especially good compressive strength properties, as well as low thermal conductivity. Especially, the mineral binder compositions should remain as stable as possible during the production process with regard to collapsing and further preferred, the obtainable hardened mineral foams should have low densities.

Surprisingly, it has been found that the combination of features of claim 1 can achieve this object. Thus, the core of the present invention is related to an ettringite forming binder composition, especially for the formation of a hardened mineral foam, said binder comprising a mixture of:
a) 65 - 100 wt.%, especially 70 - 85 wt.%, of a mixture of calcium sulfoaluminate, especially ye'elimite, and calcium sulfate;
b) 0 - 35 wt.%, especially 15 - 30 wt.%, of at least one source of calcium oxide;

wherein the wt.% are in each case relative to the total dry weight of components a) and b) together; and
whereby the at least one source of calcium oxide is different from the calcium sulfoaluminate and the calcium sulfate.

As it turned out, the inventive ettringite forming binder allows for producing hardened mineral foam with good mechanical properties, i.e. compressive strengths in the range of 35 kPa or more and low thermal conductivities of less than 36.5 mW/mK. Furthermore, lightweight hardened mineral foams with dry densities well below 100 g/L can be obtained.

Without being wished to be bound to the theory, it is assumed that the proportions of the calcium sulfate and the optional at least one source of calcium oxide allow for controlling the amount of ettringite formation during hardening of the calcium sulfoaluminate cement. Ettringite is a hexacalcium aluminate trisulfate hydrate, of general formula 3 CaO·Al₂O₃·3 CaSO₄·32 H₂O when noted as oxides. Ettringite is a technically important phase in the strength development of mineral binders and is formed during setting.

It is further believed that the specific proportion of ettringite relative to the total inorganic composition contributes to the development of hardened mineral foams with the above-mentioned beneficial properties. Remarkably, the best results in terms of strength and thermal conductivity are obtained when the proportion of ettringite is less than the maximum possible proportion of ettringite that may be formed with the calcium sulfoaluminate. Thereby, a slight overdosing of the at least one source of calcium oxide and/or the calcium sulfate seems to be optimal.

Furthermore, the ettringite forming binder composition according to the invention can be combined with common mineral foam components and/or additives, such as e.g. mineral particles and/or foaming agents, to obtain foamable compositions that can be processed to a hardened mineral foam by methods that are generally known to those skilled in the art. Therefore, no special equipment is needed for processing the binder compositions according to the invention.

Production of the hardened mineral foams from the ettringite forming compositions according to the invention can be effected directly on a building site, or the ettringite forming compositions according to the invention can be used for the production of prefabricated elements, which are installed on a building site later on.

Additional aspects of the invention are subject of further independent claims. Particularly preferred embodiments are outlined throughout the description and the dependent claims.

### Ways of carrying out the invention

A first aspect of the present invention is directed to an ettringite forming binder composition, especially for the formation of a hardened mineral foam, said binder comprising a mixture of:
a) 65 - 100 wt.%, especially 70 - 85 wt.%, of a mixture of calcium sulfoaluminate, especially ye'elimite, and calcium sulfate;
b) 0 - 35 wt.%, especially 15 - 30 wt.%, of at least one source of calcium oxide;
wherein the wt.% are in each case relative to the total dry weight of components a) and b) together.

Thereby, the at least one source of calcium oxide is different from the calcium sulfoaluminate and the calcium sulfate.

In particular, the term "calcium sulfoaluminate" is meant to be a material that upon contact with water can form ettringite. In particular, calcium sulfoaluminate is meant to be a mineral material with the following phase: C₄(A₃₋ₓFₓ)3$ (4CaO · 3-x Al₂O₃ · x Fe₂O₃ · CaSO₄), wherein x has a value of 0,1, 2, or 3.

Especially, the calcium sulfoaluminate is present in the form of ye'elimite. This is a mineral with the following formula: Ca₄Al₆O₁₂SO₄.

Especially, the calcium sulfoaluminate, especially ye'elimite, is comprised in a calcium sulfoaluminate cement (CSA). Put differently, calcium sulfoaluminate, especially ye'elimite, may be provided as a component of a calcium sulfoaluminate cement (CSA).

The term "calcium sulfoaluminate cement (CSA)" is intended to include those cementitious materials that contain as the main phase C₄(A₃₋ₓFₓ)3$ (4CaO · 3-x Al₂O₃ · x Fe₂O₃ · CaSO₄), wherein x has a value of 0,1, 2, or 3. Typically, calcium sulfoaluminate cements may also include other phases, such as aluminates (CA, C₃A, C₁₂A₇), belite (C₂S), ferrites (C₂F, C₂AF, C₄AF), ternesite (C₅S₂$), and calcium sulfate (C$, C$H, and/or C$H_{0.5}), e.g. calcium sulfate α- and/or β- hemihydrate, and/or calcium sulfate dihydrate. Especially, the calcium sulfoaluminate cement is essentially free of phases of C (CaO) and/or CH (Ca(OH)₂).

Preferred calcium sulfoaluminate cements for use in the present invention contain, with respect to the weight of the calcium sulfoaluminate cement, as phases at least 55 wt.%, especially at least 58 - 100 wt.%, of ye'elimite (C₄A₃$); at most 25 wt.%, especially 0 - 15 wt.%, of belite (C₂S); and at most 5 wt.%, especially 0 - 4.5 wt.%, of calcium sulfate.

Further preferred, the calcium sulfoaluminate cements for use in the present invention contain 57 - 70 wt.%, especially 58 - 65 wt.%, of ye'elimite (C₄A₃$); 1 - 15 wt.%, especially 3 - 9 wt.% of belite (C₂S); and 0.1 - 4.5 wt.%, especially 1 - 4 wt.%, of calcium sulfate (C$, C$H, and/or C$H_{0.5}).

Especially, the calcium sulfoaluminate cement comprises 0 - 1 wt.%, especially 0 - 0.5 wt%, in particular 0 wt.%, of phases of C (CaO) and/or CH (Ca(OH)₂)

Suitable calcium sulfoaluminate cements (CSA) are commercially available, for example, from Heidelberg Materials AG, Vicat SA, and Caltra B.V.

Component a) mentioned above consists of a mixture of calcium sulfoaluminate with additional calcium sulfate. Thereby, the calcium sulfoaluminate and the calcium sulfate are different materials.

The calcium sulfate of the mixture of calcium sulfoaluminate may be selected from calcium sulfate anhydrite, calcium sulfate α- and/or β- hemihydrate, and/or calcium sulfate dihydrate.

In particular, the calcium sulfate is selected from calcium sulfate anhydrite.

In particular, the mixture of calcium sulfoaluminate and calcium sulfate includes or consists of two different and intermixed materials, whereby the first material is calcium sulfoaluminate or a calcium sulfoaluminate cement and the second material is calcium sulfate. Especially, the mixture of calcium sulfoaluminate and calcium sulfate includes intermixed particulate calcium sulfoaluminate or calcium sulfoaluminate cement and particulate calcium sulfate.

The optional source of calcium oxide can be any type of a natural and/or synthesized material capable of being slaked by water; that is, an oxide of calcium, which reacts with water. Such sources may be natural forms of oxides of calcium and/or processed materials, which in particular have been ground, calcined and/or otherwise treated. Non-limiting examples are Portland cement, kiln dust, wollastonite (CaO·SiO₂), diopside (CaO·MgO·2SiO₂), akermanite (2CaO·MgO·2SiO₂), calcium metasilicate (CaO·SiO₂), calcined dolomite (i.e. dolomitic lime, CaO·MgO), and lime (CaO) in its various forms, e.g. quicklime, hydrated lime, hydraulic lime and high calcium lime.

Especially, the at least one source of calcium oxide is selected from Portland cement, kiln dust and/or calcium oxide.

In particular, the at least one source of calcium oxide comprises or consists of calcium oxide.

The ettringite forming binder in particular is a particulate material, in particular a dry and/or free flowing powder. The particulate material in particular comprises or consists of submicron-sized particles, micrometer-sized particles and/or millimeter-sized particles.

Especially, the particle size D90 of the ettringite forming binder is below 250 µm, especially below 150 µm or below 100 µm.

The particle size can be determined by laser diffraction as described in ISO 13320:2009. In particular, a Mastersizer 2000 instrument with a Hydro 2000G dispersion unit and the Mastersizer 2000 software from Malvern Instruments GmbH (Germany) is used. Isopropanol, for example, is suitable as the dispersing medium. Preferably, a particle size of non-spherical or irregular particles is represented by the equivalent spherical diameter of a sphere of equivalent volume.

Thereby, the calcium sulfoaluminate or calcium sulfoaluminate cement, the calcium sulfate and the optional at least one source of calcium oxide each are present in the form of particles, especially ground particles.

In general, preferably, a weight ratio of the sum of the weight of calcium sulfate and the optional at least one source of calcium oxide, especially calcium oxide, to the weight of the calcium sulfoaluminate, especially ye'elimite, is from 1.5-5.0, especially 2.0-4.5, in particular 2.0-4.0, preferably 2.0-3.5.

According to a first special embodiment, the ettringite forming binder comprises:
a) More than 65 wt.%, especially 68 - 80 wt.%, in particular 70 - 79 wt.%, of calcium sulfoaluminate, especially ye'elimite; and less than 35 wt.%, especially from 10 wt.% to less than 35 wt.%, in particular 15 - 33 wt.%, of calcium sulfate, especially calcium sulfate anhydrite;
b) Less than 10 wt.%, especially 0 - 9 wt.%, in particular 0 - 4 wt.% or 0 wt.%, of the at least one source of calcium oxide, especially calcium oxide;
wherein the wt.% are in each case are relative to the total dry weight of components a) and b) together.

Further preferred, the ettringite forming binder comprises:
a) 72 - 78 wt.%, e.g. 75 wt.%, of calcium sulfoaluminate, especially ye'elimite; and 22 - 28 wt.%, e.g. 25 wt.%, of calcium sulfate, especially calcium sulfate anhydrite;
b) 0 - 4 wt.%, e.g. 0 wt.%, of the at least one source of calcium oxide, especially calcium oxide;
wherein the wt.% are in each case relative to the total dry weight of components a) and b) together.

In this case, the ettringite forming binder is mainly based on calcium sulfoaluminate and calcium sulfate. The at least one source of calcium oxide, if present at all, only has a small proportion. In a special embodiment, no source of calcium oxide, especially CaO, is present.

Thereby, in particular, a weight ratio of calcium sulfoaluminate, especially ye'elimite, to calcium sulfate is from 1.5-5, especially 2-4.5, in particular 2.0-4.0, preferably 2.0-3.5.

According to a second special embodiment, the ettringite forming binder comprises:
a) 17 - 42 wt.%, especially 18 - 35 wt.%, in particular 20 - 28 wt.% of calcium sulfoaluminate and 35 - 65 wt.%, especially 43 - 63 wt.%, in particular 47 - 62 wt.% of calcium sulfate;
b) More than 15 wt.%, especially 15 - 34 wt.%, in particular 17 - 30 wt.%, of the at least one source of calcium oxide;
wherein the wt.% are in each case relative to the total dry weight of components a) and b).

Further preferred, the ettringite forming comprises:
a) 20 - 26 wt.%, e.g. 23 wt.%, of calcium sulfoaluminate and 50 - 57 wt.%, e.g. 53 wt.%, of calcium sulfate;
b) 20 - 28 wt.%, e.g. 24 wt.%, of the at least one source of calcium oxide;
wherein the wt.% are in each case relative to the total dry weight of components a) and b) together.

In this case, the ettringite forming binder is based on three components, i.e. calcium sulfoaluminate, calcium sulfate and the at least one source of calcium oxide.

In particular, a weight ratio of calcium sulfoaluminate, especially ye'elimite, to calcium sulfate is from 0.20-1.00, especially 0.26-0.65, in particular 0.35-0.62, preferably 0.38-0.48.

Especially, a weight ratio of calcium sulfoaluminate, especially ye'elimite, to the at least one source of calcium oxide, especially calcium oxide, is from 0.4-2.5, especially 0.5-1.9, in particular 0.7-1.3, preferably 0.8-1.1.

In particular, a weight ratio of calcium sulfate to the at least one source of calcium oxide, especially calcium oxide, is from 1.1-9.0, especially 1.5-3.5, in particular 1.62-3.25, preferably 2.0-2.5.

According to a further preferred embodiment, a weight ratio of calcium sulfoaluminate and optionally present calcium sulfate to the at least one source of calcium oxide, especially calcium oxide, is from 2.2-15.0, especially 2.35-6.0, in particular 2.80-5.00, preferably 3.00-3.50.

Further preferred, all of the above-mentioned weight ratios are realized in combination. Thereby, preferably, all second-largest ranges or all third-largest ranges or all fourth largest rages are realized in combination.

Therefore, according to a highly preferred embodiment, a weight ratio of:
- calcium sulfoaluminate, especially ye'elimite, to calcium sulfate is from 0.35-0.62;
- calcium sulfoaluminate, especially ye'elimite, to the at least one source of calcium oxide, especially calcium oxide, is from 0.7-1.3;
- calcium sulfate to the at least one source of calcium oxide, especially calcium oxide, is from 1.62-3.25;
- calcium sulfoaluminate, especially ye'elimite, and optionally present calcium sulfate to the at least one source of calcium oxide, especially calcium oxide, is from 2.80-5.00.

Most preferred, a weight ratio of:
- calcium sulfoaluminate, especially ye'elimite, to calcium sulfate is from 0.38-0.48;
- calcium sulfoaluminate, especially ye'elimite, to the at least one source of calcium oxide, especially calcium oxide, is from 0.8-1.1;
- calcium sulfate to the at least one source of calcium oxide, especially calcium oxide, is from 2.0-2.5;
- calcium sulfoaluminate, especially ye'elimite, and optionally present calcium sulfate to the at least one source of calcium oxide, especially calcium oxide, is from 3.00-3.50.

A further aspect of the present invention is related to a building material, especially a particulate building material, for the formation of a mineral foam comprising an ettringite forming binder as described above and inorganic particles.

Thereby, the inorganic particles are different from the components of the ettringite forming binder.

The inorganic particles are for example selected from pure and/or mixed metal oxides, hydroxides, carbides, nitrides, phosphates, carbonates, silicates, sulfates.

According to embodiments, the particles are chosen from particles of clay, talc, silica, calcium carbonate, ferrite, gibbsite, titanium oxide, zinc oxide, aluminum oxide, manganese oxide, magnesium oxide, zirconium oxide, tin oxide, cerium oxide, spinels, aluminum hydroxide, calcium hydroxide, magnesium hydroxide, silicon carbide, boron carbide, silicon nitride, boron nitride, calcium phosphates, nickel carbonate, calcium carbonate, magnesium carbonate, silica fume, fly ash, quartz, ground glasses, slag, calcium silicates, mullite, cordierite, zeolites, diatomaceous earth, Portland cement, and/or carbon black particles.

In particular, the inorganic particles are selected from type II additives according to EN 206:2013+A2:2021.

Especially preferred, the inorganic particles are selected from latent hydraulic and/or pozzolanic particles, especially fly ash and/or metakaolin.

The particulate building material in particular is a dry and/or free flowing powder. The particulate material in particular comprises or consists of submicron-sized particles, micrometer-sized particles and/or millimeter-sized particles.

The inorganic particles in particular have a median particle size D50 in the range of from 30 nm to 300 µm, especially 0.1 - 50 µm, in particular 0.5 - 10 µm, particularly 0.9 - 7 µm.

Especially the inorganic particles comprise a mixture of at least two types of chemically and physically different particles, whereby a particle size D50 of a first type of particles is below 10 µm, especially 0.5 - 10 µm, and a particle size D50 of a second type of particles is above 10 µm, particularly especially 20 - 75 µm, in particular 30 - 55 µm. The first type of particles in particular is selected from latent hydraulic and/or pozzolanic particles, especially fly ash and/or metakaolin; and the second type of particles in particular is selected from a metal oxide. The metal oxide in particular is a catalyst for chemical foaming, such as e.g. MnO₂.

Especially, the inorganic particles comprise a foam stabilizing agent, especially selected from hydrophobized calcium carbonate.

A weight ratio of the inorganic particles to the ettringite forming binder preferably is from 0.5 - 2, especially 0.65 - 1.5, in particular 0.75 - 1.4, e.g. 0.9 - 1.1.

By selecting specific inorganic particles and/or adjusting their proportions, the properties of the mineral foams to be produced can be adjusted for specific applications.

Ettringite forming binders or building materials as described above furthermore can comprise admixtures, e.g. selected from fibers, e.g. cellulose fibers, glass fibers and/or PE fibers; rheology modifiers; plasticizers; superplasticizers; water retention agents; accelerators; retarders; pigments, chromium VI reducers; biocides; wetting agents; and/or de-dusting additives. For example a proportion of the admixtures is from 0.001 - 10 wt.%, especially 0.01 - 5 wt.%, in particular 0.1 - 2.5 wt.%, with respect to the total dry weight of the ettringite forming binder or the building material.

Ettringite forming binders or building materials as described above can directly be used to produce processable mineral foams, e.g. by mixing with water, and foaming the resulting mix by chemical, physical, and/or mechanical foaming. Hardened mineral foams are then obtainable by hardening the so obtained mineral foams. In the present context, the terms "mineral foam" and "inorganic foam" are used interchangeably.

A further aspect of the present invention is related to a foamable composition comprising an ettringite forming binder as described above or a material as described above; and water; and a foaming agent, in particular a metal powder, especially aluminum and/or magnesium, and/or a peroxide, especially H₂O₂.

Especially, the weight ratio of water to the total dry weight of all solids of the ettringite forming binder or the building material is preferably 0.5 - 2.5, more preferably 1.0 - 2.0, even more preferably 1.00 - 1.75.

Another aspect of the present invention is directed to a process for the formation of a mineral foam, said process comprising the steps of:
(i) mixing an ettringite forming binder as described above and water or
   mixing a building material as descried above and water, or
   providing a foamable composition as described above; and
(ii) foaming the resulting mix or the foamable composition by chemical, physical, and/or mechanical foaming.

Especially, the weight ratio of water to the total dry weight of all solids of the ettringite forming binder or the building material is 0.5 - 2.5, more preferably 1.0 - 2.0, even more preferably 1.00 - 1.75.

While foaming, a gas phase is introduced into and/or generated in the resulting mix or the foamable composition.

The gas phase can be introduced by mechanical, physical and/or chemical foaming. Non-limiting examples of gases forming the gas phase comprise air, nitrogen, noble gas, carbon dioxide, hydrocarbons, hydrogen, oxygen, and mixtures thereof.

The gas phase can be introduced by mechanical foaming in the presence of the respective gas. Mechanical foaming may be performed for example by using a mixer, and/or by an oscillating process, and/or by a stator-rotor process.

The gas phase can also be introduced into and/or generated in the resulting mix or the foamable composition by physical and/or chemical foaming, wherein the physical and/or chemical foaming process is suitable to liberate a gas. Preferably, a foaming agent is used, which evaporates, decomposes and/or reacts with water and/or an acid, so as to liberate the gas.

Non-limiting examples of foaming agents are peroxides, such as hydrogen peroxide, dibenzylperoxide, peroxobenzoic acid, peroxoacetic acid, alkali metal peroxides, perchloric acid, peroxomonosulfuric acid, dicumyl peroxide or cumyl hydroperoxide; isocyanates, carbonates and bicarbonates, such as CaCO₃, Na₂CO₃, and NaHCO₃, which are preferably used in combination with an acid, e.g., a mineral acid; metal powders, such as aluminum powder, magnesium powder; azides, such as methyl azide; hydrazides, such as p-toluenesulfonylhydrazide; and/or hydrazine.

Especially preferred, the foaming agent is selected from, a metal powder, especially aluminum and/or magnesium, and/or a peroxide, especially H₂O₂.

Chemical foaming can be facilitated by the use of a catalyst. Suitable catalysts preferably comprise Mn²⁺, Mn⁴⁺, Mn⁷⁺ and/or Fe³⁺ cations. Alternatively, enzyme catalase may be used as catalyst. Non-limiting examples of suitable catalysts are MnO₂ and/or KMnO₄. Such catalysts are preferably used in combination with peroxide foaming agents, such as e.g. H₂O₂.

Especially, the above describe process further comprises a further step of hardening the mineral foam.

Hardening of the inorganic foam typically takes place when contacting ettringite forming binder with water and/or leaving the inorganic binder to react between 5 - 50 °C and a pressure of 1 atm.

Hardening at higher temperatures and/or at higher pressure is not preferred within the present context. A hardened inorganic foam is obtained, when the mechanical strength, especially the impact resistance, the flexural strength, and/or the compressive strength, does not significantly increase anymore with time.

Typically, a hardened inorganic foam is obtained after hardening for 28 days at 20 °C and 1 atm pressure. **It** can be beneficial to cover the inorganic foam during hardening.

Covering prevents the fast evaporation of water and can lead to a higher compressive strength. It is possible to additionally dry a hardened inorganic foam of the present invention at elevated temperatures, for example at 40 - 90 °C.

According to a preferred embodiment, step (i) comprises the following sub-steps:
(ia) providing a foam stabilizing agent, in particular hydrophobized calcium carbonate, and optionally a catalyst as described above;
(ib) mixing all of the solid components of the ettringite forming binder or the building material, especially in dry state;
(ic) mixing the solid components of step (ib) with the components of step (ia) and with water to obtain a slurry;

Further preferred, step (ii) comprises the following sub-steps:
(iia) mixing in a foaming agent with the slurry of step (ic), especially a peroxide foaming agents, such as H₂O₂;
(iib) optionally, casting the slurry if step (iia) into a mold.

This means that the mineral foam can be produced in a well-controlled process using standard equipment.

A still further aspect of the present invention is directed to a hardened mineral foam.

Especially, the hardened mineral foam comprises a foamed and hardened ettringite forming binder as described above, a foamed and hardened building material as described above or the hardened mineral foam is obtainable or obtained by a process as described above.

Especially, the hardened mineral foam has a thermal conductivity of less than 40 mW/mK, in particular less than 36.5 mW/mK, especially 30.0 - 36.5 mW/mK, for example 35.0 - 36.2 mW/mK, as measured according to EN 12667:2001.

Further preferred, the hardened mineral foam has a compressive strength of at least 10 kPa, preferably at least 35 kPa, more preferably at least 40 kPa, in particular at least 65 kPa, as measured according to EN 826:2013.

The dry density of the hardened mineral foam in particular is below 300 g/L, suitably below 150 g/L, preferably below 100 g/L and more preferably below 70 g/L. In particular, the dry density can be even further reduced to below 60 g/L, preferably below 50 g/L, as measured according to EN 12390-7:2021.

Furthermore, the invention is concerned with the use of calcium sulfate and/or a source of calcium oxide, especially calcium oxide, to set the thermal conductivity and/or the compressive strength of a mineral foam based on an ettringite forming binder or on a building material comprising an ettringite forming binder.

The ettringite forming binder, calcium sulfate and/or the source of calcium oxide are defined as described above.

Preferably, the ettringite forming binder, the calcium sulfate and/or the source of calcium oxide are used in proportions as described above in connection with the ettringite forming binder composition according to the invention.

In particular, the ettringite forming binder comprises or consists of calcium sulfoaluminate, especially ye'elimite as described above.

Thereby the thermal conductivity is set to be less than 40 mW/mK, in particular less than 36.5 mW/mK, especially 30.0 - 36.5 mW/mK, for example 35.0 - 36.2 mW/mK, as measured according to EN 12667:2001; and/or the compressive strength is set to be at least at least 10 kPa, preferably at least 35 kPa, more preferably at least 40 kPa, in particular at least 65 kPa

Also, the invention is concerned with a method for the control of the thermal conductivity and/or the compressive strength of a mineral foam, especially a hardened mineral foam, comprising the steps of:
(i) providing an ettringite forming binder, especially calcium sulfoaluminate, preferably ye'elimite and;
(ii) adding calcium sulfate and/or a source of calcium oxide, especially calcium oxide, to the ettringite forming binder;
(iii) optionally, foaming the resulting mix or the foamable composition by chemical, physical, and/or mechanical foaming, especially as described above;
(iv) optionally, hardening the mineral foam, especially as described above.

The ettringite forming binder, calcium sulfate and/or the source of calcium oxide are defined as described above.

In this method for the control of the thermal conductivity and/or the compressive strength of a mineral foam, preferably, a proportion of the calcium sulfate and/or the source of calcium oxide is chosen such that a thermal conductivity of less than 36.5 mW/mK, especially 30.0 - 36.5 mW/mK, in particular 35.0 - 36.2 mW/mK, as measured according to EN 12667:2001, is obtained; and/or a compressive strength of at least 35 kPa, especially at least 40 kPa, in particular at least 65 kPa, as measured according to as measured according to EN 826:2013, is obtained.

Further preferred, foaming is effected such that the dry density of the hardened mineral foam in particular is below 300 g/L, suitably below 150 g/L, preferably below 100 g/L and more preferably below 70 g/L. In particular, the dry density can be even further reduced to below 60 g/L, preferably below 50 g/L, as measured according to EN 12390-7:2021.

Further advantageous configurations of the invention are evident from the exemplary embodiments.

### Exemplary embodiments

### Method for producing mineral foams

For producing mineral foams, first a suspension of calcium carbonate hydrophobized with nonanoic acid as solid foam stabilizing agent and MnO₂ as catalyst in water was produced by mixing the components with an IKA T25 Ultra-Turax mixer at 18'200 rpm. In a second step, the further solid components as listed in table 1 were mixed in dry state and subsequently added to the suspension produced in the first step by mixing with a Rilem mixer. In a next step, a foaming agent in the form of H₂O₂ was added to the slurry while stirring with an IKA mixer at 350 rpm. Details about proportions and components are shown in tables 1 and 2.

The so obtained samples were casted into a mold (30 × 22 × 25 cm³). 15 minutes after casting, the samples were covered with a foil to prevent the samples from drying too quickly. After 1 day at 23 °C / 50 % r.h., the so obtained mineral foams were de-molded and left for curing for a total of 14 days at 23 °C / 50 % r.h. for the thermal conductivity measurements, and for a total of 21 days for the compressive strength measurement.

### Measurement procedures

The thermal conductivities of the hardened mineral foams were measured according to EN 12667:2001.

The dry density of the hardened mineral foams were measured according to EN 12390-7:2021.

The compressive strength of the hardened mineral foams were measured according to EN 826:2013.

### Results obtained with mineral foam samples

Tables 1 and 2 show the compositions and properties of several mineral foam samples.

**Table 1 (the percentages given in parentheses indicate the proportion or the respective component (ye'elimite, CaSO₄ and CaO) with respect to the dry weight of ye'elimite, CaSO₄ and CaO)**

| | **A1** | **A2** | **A3** | **A4** | **A5** |
|---|---|---|---|---|---|
| **Composition** | | | | | |
| Foam stabilizing agent (hydrophobized calcium carbonate) [g] | 84.84 | 84.84 | 84.84 | 84.84 | 84.84 |
| Manganese ore (80 - 90 wt.% MnO₂) [g] | 3.84 | 3.84 | 3.84 | 3.84 | 3.84 |
| 1:1 mix of fly ash (D50 = 10 µm) and metakaolin (D50 = 1.5 µm) [g] | 300 | 300 | 300 | 300 | 300 |
| Polypropylen fibers (MasterFiber 080; Master Builders) [g] | 3 | 3 | 3 | 3 | 3 |
| CSA (AliPre Green; Heidelberg Zement AG)^{#} (binder component) [g] | 66 | 96 | 126 | 96 | 96 |
| Thereof ye'elimite [g] | 41 (15%) | 60 (23%) | 78 (31%) | 60 (23%) | 60 (23%) |
| CaSO₄ (Anhydrite; binder component) [g] | 156 (57%) | 126 (48%) | 96 (38%) | 156 (59%) | 141 (53%) |
| CaO (binder component) [g] | 78 (28%) | 78 (30%) | 78 (31%) | 48 (18%) | 63 (24%) |
| H₂O₂ (30%) [g] | 140.52 | 140.52 | 140.52 | 114.77 | 99.43 |
| water/solids (weight ratio) | 1.54 | 1.54 | 1.54 | 1.54 | 1.54 |

| **Properties** | | | | | |
|---|---|---|---|---|---|
| Dry density [g/L] | 67 | 70.5 | 73.4 | 72.8 | 71.8 |
| Strength [kPa] | 20.64 | 42.45 | 27.96 | 48.73 | 74.13 |
| Thermal conductivity [mW/mK] | 34.46 | 35.09 | 34.72 | 35.25 | 35.95 |

| | | | | | |
|---|---|---|---|---|---|
| ^{#} Calcium sulfoaluminate cement with 62 wt.% ye'elimite, 6.4 wt.% belite, 3.2 wt.% calcium sulfates, 0 wt.% CaO, 0 wt.% Ca(OH)₂; rest to 100 wt.%: silicates, sulfates, magnesium oxide, iron oxide, quartz, carbonates, titanates. | | | | | |

**Table 2 (the percentages given in parentheses indicate the proportion or the respective component (ye'elimite, CaSO₄ and CaO) with respect to the dry weight of ye'elimite, CaSO₄ and CaO)**

| | **A6** | **A7** | **A8*** | **A9*** | **A10*** |
|---|---|---|---|---|---|
| **Composition** | | | | | |
| Foam stabilizing agent (hydrophobized calcium carbonate) [g] | 84.84 | 84.84 | 84.84 | 84.84 | 84.84 |
| Manganese ore (80 - 90 wt.% MnO₂) [g] | 3.84 | 3.84 | 3.84 | 3.84 | 3.84 |
| 1:1 mix of fly ash (D50 = 10 µm) and metakaolin (D50 = 1.5 µm) (inorganic particles) [g] | 300 | 300 | 300 | 300 | 300 |
| Polypropylen fibers (MasterFiber 080; Master Builders; admixture) [g] | 3 | 3 | 3 | 3 | 3 |
| CSA (AliPre Green; Heidelberg Zement AG^{#}; binder component) [g] | 126 | 156 | 126 | 156 | 186 |
| Thereof ye'elimite [g] | 78 (30%) | 97 (39%) | 78 (30%) | 97 (39%) | 115 (49%) |
| CaSO₄ (Anhydrite; binder component) [g] | 126 (51%) | 96 (41%) | 156 (63%) | 126 (53%) | 96 (43%) |
| CaO (binder component) [g] | 48 (19%) | 48 (20%) | 18 (7%) | 18 (7%) | 18 (8%) |
| H₂O₂ (30 wt.%; foaming agent) [g] | 114.77 | 114.77 | 79.78 | 79.78 | 79.78 |
| water/solids (weight ratio) | 1.54 | 1.54 | 1.54 | 1.54 | 1.54 |

| **Properties** | | | | | |
|---|---|---|---|---|---|
| Dry density [g/L] | 74.7 | 76.3 | 83.2 | 84.4 | 87.0 |
| Strength [kPa] | 55.21 | 37.69 | 30.39 | 36.83 | 43.43 |
| Thermal conductivity [mW/mK] | 36.71 | 36.86 | 36.22 | 37.23 | 37.78 |

| | | | | | |
|---|---|---|---|---|---|
| ^{#} Calcium sulfoaluminate cement with 62 wt.% ye'elimite, 6.4 wt.% belite, 3.2 wt.% calcium sulfates, 0 wt.% CaO, 0 wt.% Ca(OH)₂; rest to 100 wt.%: silicates, sulfates, magnesium oxide, iron oxide, quartz, carbonates, titanates. * A8, A9 and A10 are reference samples, which are not according to the invention. | | | | | |

As evident from tables 1 and 2, improved mineral foams A1 - A7 are obtainable from the ettringite forming binder compositions or building materials with additional particles, respectively.

The mineral binder foams simultaneously have good mechanical properties (compressive strength), as well as low thermal conductivities and low dry densities.

This is in particular true for samples A2, A4 and A5. These samples have a compressive strength of at least 42.45 kPa, a thermal conductivity below 36.0 mW/mK, and a dry density below 73.0 g/L. Particularly improved is example A5.

Therefore, hardened mineral foams with such thermal conductivities are highly suitable for insulating applications.

Remarkably, although sample A6 has been optimized with respect to ettringite formation, it performs not as good as sample A5. Therefore, a slight overdosing of the calcium oxide and calcium sulfate seems to be optimal.

## Claims

1. An ettringite forming binder composition, especially for the formation of a hardened mineral foam, said binder comprising a mixture of:
a) 65 - 100 wt.%, especially 70 - 85 wt.%, of a mixture of calcium sulfoaluminate, especially ye'elemite, and calcium sulfate;
b) 0 - 35 wt.%, especially 15 - 30 wt.%, of at least one source of calcium oxide;
wherein the wt.% are in each case relative to the total dry weight of components a) and b) together; and
whereby the at least one source of calcium oxide is different from the calcium sulfoaluminate and the calcium sulfate.

2. The ettringite forming binder as claimed in claim 1 comprising:
a) 17 - 42 wt.%, especially 18 - 35 wt.%, in particular 20 - 28 wt.% of calcium sulfoaluminate and 35 - 65 wt.%, especially 43 - 63 wt.%, in particular 47 - 62 wt.% of calcium sulfate;
b) More than 15 wt.%, especially 15 - 34 wt.%, in particular 17 - 30 wt.%, of the at least one source of calcium oxide;
wherein the wt.% are in each case relative to the total dry weight of components a) and b) together.

3. The ettringite forming binder as claimed in any of preceding claims comprising:
a) 20 - 26 wt.%, e.g. 23 wt.%, of calcium sulfoaluminate and 50 - 57 wt.%, e.g. 53 wt.%, of calcium sulfate;
b) 20 - 28 wt.%, e.g. 24 wt.%, of the at least one source of calcium oxide;
wherein the wt.% are in each case relative to the total dry weight of components a) and b) together.

4. The ettringite forming binder as claimed in any of preceding claims whereby a weight ratio of the sum of the weight of calcium sulfate and the optional at least one source of calcium oxide, especially calcium oxide, to the weight of the calcium sulfoaluminate, especially ye'elimite, is from 1.5-5.0, especially 2.0-4.5, in particular 2.5-4.0, preferably 2.75-3.75.

5. The ettringite forming binder as claimed in any of preceding claims whereby the calcium sulfoaluminate is present in the form of ye'elemite.

6. The ettringite forming binder as claimed in any of preceding claims whereby the calcium sulfate is calcium sulfate anhydrite.

7. The ettringite forming binder as claimed in any of preceding claims whereby the least one source of calcium oxide is calcium oxide.

8. A building material, especially a particulate building material, for the formation of a mineral foam, comprising an ettringite forming binder according to any of preceding claims, and inorganic particles, whereby the inorganic particles are different from the components of the ettringite forming binder.

9. The building material, especially a particulate building material, according to claim 8, whereby the inorganic particles are selected from latent hydraulic and/or pozzolanic particles, especially fly ash and/or metakaolin.

10. The building material as claimed in any of preceding claims 8 -9, whereby the inorganic particles have a median particle size D50 in the range of from 30 nm to 300 µm, especially 0.1 - 50 µm, in particular 0.5 - 10 µm, particularly 0.9 - 7 µm.

11. The building material as claimed in any of preceding claims 8 - 10, whereby a weight ratio of the inorganic particles to the ettringite forming binder is from 0.5 - 2, especially 0.65 - 1.5, in particular 0.75 - 1.4, e.g. 0.9 - 1.1.

12. A foamable composition comprising an ettringite forming binder according to any of claims 1 - 7 or a building material according to any of claims 8 - 11 and water, and optionally a foaming agent, especially a metal powder, especially aluminum and/or magnesium, and/or a peroxide, especially H₂O₂.

13. A process for the formation of a mineral foam, said process comprising the steps of
(i) mixing an ettringite forming binder according to any of claims 1 - 7 and water or
mixing a building material according to any of claim 8 - 11 and water, or
providing a foamable composition according to claim 12; and
(ii) foaming the resulting mix or the foamable compositon by chemical, physical, and/or mechanical foaming.

14. A hardened mineral foam comprising a foamed and hardened ettringite forming binder according to any of claims 1 - 7, or comprising a foamed and hardened building material according to any of claims 8 - 11, or the hardened mineral foam is obtainable or obtained by a process according to claim 13.

15. The hardened mineral foam as claimed in claim 14 or obtainable or obtained in a process according to claim 12, whereby it has a thermal conductivity of less than 36.5 mW/mK, especially 30.0 - 36.5 mW/mK, in particular 35.0 - 36.2 mW/mK, as measured according to EN 12667:2001; and whereby it has a compressive strength of at least 35 kPa, especially at least 40 kPa, in particular at least 65 kPa, as measured according to as measured according to EN 826:2013.

16. The use of calcium sulfate and/or a source of calcium oxide, especially calcium oxide, to set the thermal conductivity and/or the compressive strength of a hardened mineral foam based on an ettringite forming binder, whereby the ettringite forming binder comprises calcium sulfoaluminate, preferably ye'elimite.
